# EUROPÄISCHE PATENTSCHRIFT

(11) **EP 1 023 331 B1**
(45) Veröffentlichungstag und Bekanntmachung des Hinweises auf die Patenterteilung: **13.06.2001**
(21) Anmeldenummer: 98947549.6
(22) Anmeldetag: 24.09.1998
(51) Int. Cl.: C08F 2/20, C08F 18/08, C08F 8/12, C08F 6/24

(54) **VERFAHREN ZUR HERSTELLUNG VON SCHUTZKOLLOID-STABILISIERTEN POLYMEREN**
METHOD FOR PRODUCING POLYMERS STABILISED WITH PROTECTIVE COLLOIDS
PROCEDE DE PREPARATION DE POLYMERES STABILISES PAR COLLOIDES PROTECTEURS

(30) Priorität: 26.09.1997 DE 19742679
(43) Veröffentlichungstag der Anmeldung: 02.08.2000
(73) Patentinhaber: WACKER-CHEMIE GMBH, D-81737 München (DE)
(72) Erfinder: MAYER, Theo, D-84387 Julbach (DE); WEITZEL, Hans-Peter, D-84571 Reischach (DE); HAERZSCHEL, Reinhard, D-84489 Burghausen (DE); BASTELBERGER, Thomas, D-84547 Emmerting (DE)
(74) Vertreter: Schuderer, Michael, Dr.
(86) Internationale Anmeldenummer: EP9806102
(87) Internationale Veröffentlichungsnummer: WO9916794

(56) Entgegenhaltungen:
- WO-A-96/17891
- GB-A- 2 181 143
- US-A- 4 684 704

## Beschreibung

Die Erfindung betrifft ein Verfahren zur Herstellung von Schutzkolloid-stabilisierten Polymeren in Form deren wässrigen Polymerdispersionen oder in Wasser redispergierbaren Pulvern.

In Wasser redispergierbare Polymerpulver, welche durch Trocknung der entsprechenden Polymerdispersionen zugänglich sind, sind bekannt und werden seit vielen Jahren insbesondere im Bausektor mit Erfolg eingesetzt. Sie verbessern das Eigenschaftsbild von hydraulisch abbindenden Systemen wie Zementmörteln, beispielsweise deren Abriebsbeständigkeit, Biegezugfestigkeit und Haftung. Üblicherweise, und solche Produkte sind am Markt vertreten, werden solche Produkte auf Basis Polyvinylacetat, Vinylacetat-Ethylen-Copolymere, Vinylacetat-Vinylester-Copolymere und Vinylchlorid-Ethylen-Copolymere hergestellt.

Die Anforderungen, die an ein technisch brauchbares Dispersionspulver gestellt werden, sind sehr hoch: Es muß rieselfähig sein, es darf beim Lagern nicht zusammenblocken, das heißt, es darf seine Rieselfähigkeit nicht mit der Zeit verlieren. Verblockt das Pulver, kann es praktisch nicht mehr gehandhabt werden. Große Klumpen können nicht mehr in die pulverförmige Rezeptur eingemischt werden. Um seine volle Wirksamkeit zu entfalten, muß das Pulver in Wasser wieder sehr gut redispergierbar sein, so daß die Ausgangsteilchen der Dispersion erhalten werden.

Redispersionspulver konkurrieren mit Dispersionen in den einzelnen Einsatzgebieten und die Bindekraft dieser Bindemittel hängt z. B. bei Farben bekanntermaßen von der Teilchengröße ab. Beim Einsatz in Kombination mit hydraulischen Bindemitteln wie Zement zur Verbesserung der Mörteleigenschaften, ein Haupteinsatzgebiet von Redispersionspulvern, müssen die Rezepturen über eine gewisse Zeit stabil bleiben und dürfen ihre Verarbeitungskonsistenz nicht wesentlich verändern (Zementstabilität); denn es ist einem Anwender nicht zuzumuten, daß er innerhalb einer kurzen Zeitspanne eine neue Mischung anrühren muß. Ein solches Produkt würde nicht akzeptiert. In der Beton- und Mörtelindustrie spielen die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frost-taustabil. Die mit dem Dispersionspulver vergüteten hydraulisch abbindenden Systeme sollen zudem noch bessere Haftung gegenüber den unvergüteten Systemen erbringen.

Neben den genannten Dispersionspulver auf der Basis von Polyvinylacetat, Vinylacetat-Ethylen-Copolymeren, Vinylacetat-Vinylester-Copolymeren und Vinylchlorid-Ethylen-Copolymeren sind auch solche auf der Basis von Styrol/Butadien-, Styrol/Acrylat- und (Meth)acrylat-Polymerisaten bekannt, welche aber bezüglich deren Herstellungsverfahren und bezüglich der anwendungstechnischen Eigenschaften nicht voll befriedigen können.

Die WO-A 96/17891 betrifft die Herstellung von in Wasser redispergierbaren Polymerpulvern auf der Basis von Vinylacetat-, Styrol/Butadien- und Styrol/Acrylat-Copolymeren, wobei die Herstellung der Polymerisate nach dem Emulsionspolymerisationsverfahren in Gegenwart üblicher Emulgatoren erfolgt, und vor der Trocknung der Polymerdispersion ein Gemisch aus Saccharid, anionischem Alkylaryl-Emulgator und Polyvinylpyrrolidon zugegeben wird. Aus der WO-A 96/20963 ist ein Verfahren zur Herstellung von in Wasser redispergierbaren Polymerpulvern auf der Basis von Styrol/Butadien-, Styrol/Acrylat- und (Meth)acrylat-Polymerisaten bekannt, wobei die Polymerisate in einer Zweistufen-Polymerisation in Gegenwart von Emulgator unter Erhalt von Kern-Schale-Polymerisaten hergestellt werden und durch Sprühtrocknung getrocknet werden. Die WO-A 96/41825 betrifft ebenfalls Dispersionspulver auf der Basis von Kern-Schale-Polymerisaten, wobei die Schale Saccharid-funktionelle Comonomere und vernetzbare Comonomere, zur kovalenten Anbindung der Schale an den Kern, aufweist. Neben der relativ aufwendigen Verfahrensweise zur Herstellung der Redispersionspulver können aufgrund der relativ geringen Teilchengrößen auch die anwendungstechnischen Eigenschaften, speziell die Verarbeitbarkeit (Zementstabilität), nicht zufriedenstellen.

In der EP-A 62106 (US-A 4397968) wird empfohlen, zur Herstellung von wässrigen Dispersionen von Polyvinylalkohol-stabilisierten (Meth)acrylat- oder Styrol-Copolymerisaten zur Verbesserung der Wasserfestigkeit der Polymerisate die Hauptmenge der Monomeren während der Polymerisation zuzudosieren. Die Trocknung der Dispersionen zu Pulvern wird erwähnt. Ein Nachteil der damit erhältlichen Redispersionspulver besteht darin, daß sie aufgrund ihrer schlechten Zementstabilität nicht in zementhaltigen Massen eingesetzt werden können, die Verarbeitungszeit ist zu kurz, schon nach kurzer Zeit verändern die Massen ihre Konsistenz, sie werden zunehmend dicker und sind nicht mehr verarbeitbar.

Aus der EP-A 538571 ist bekannt, bei der Herstellung von mit teilverseiftem Polyvinylalkohol stabilisierten Polymerdispersionen zur Einstellung der Viskosität und Hydrophilie spezielle Initiatorsysteme einzusetzen. Die DE-A 1260145 empfiehlt zur Herstellung von feinteiligen Polymerdispersionen modifizierte Polyvinylalkohole einzusetzen. Nachteilig ist, daß mit dieser Verfahrensweise nur Dispersionen erhalten werden, die stark zum Schäumen neigen, was sich nachteilig auf die Verarbeitbarkeit und die anwendungstechnischen Eigenschaften auswirkt.

In der WO-A 97/15603 wird beschrieben, daß bei der Emulsionspolymerisation von hydrophoben Monomeren wie Styrol oder Butadien bei der Stabilisierung mittels Schutzkolloiden keine stabilen Polymerdispersionen erhalten werden. Zum Erhalt von stabilen, schutzkolloidstabilisierten Polymerdispersionen auf dieser Monomerbasis wird empfohlen, in Gegenwart von mercaptofunktionalisierten, copolymerisierbaren Silanen zu polymerisieren. Nachteilig ist, daß man mit dieser Verfahrensweise zwangsläufig auf die Herstellung silanhaltiger Copolymere beschränkt ist.

In der DE-A 4212768 wird die Herstellung von wässrigen Polymerdispersionen auf der Basis von Styrol-, Butadien- und (Meth)acrylat-Polymerisaten beschrieben und die Trocknung der Dispersionen zu Dispersionspulvern erwähnt. Die Polymerisation erfolgt in Gegenwart eines Makromonomers aus einem mit Maleinsäure oder -Fumarsäure veresterten Polyalkylenglykol.

Die DE-C 3590744 (GB-A 2181143) beschreibt ein Verfahren zur Herstellung von Schutzkolloid-stabilisierten Polymeren, bei dem Vinylmonomere in Gegenwart eines mit Oxyalkylen-Einheiten hydrophobierten Schutzkolloids polymerisiert werden. Nachteilig beim Einsatz von mit Oxyalkylen-Einheiten hydrophobierten Polyvinylalkoholen ist die Weichmacherwirkung von Oxyalkylen-Einheiten, welche zur Verblockung damit hergestellter Pulver und zur Verschlechterung deren Redispergierbarkeit führt. Aufgrund des relativ polaren Charakters der Oxyalkylen-Einheiten ist auch die Wasserfestigkeit deutlich reduziert.

Es bestand daher die Aufgabe, ein Verfahren zur Herstellung von schutzkolloidstabilisierten Polymerdispersionen und von schutzkolloidstabilisierten, in Wasser redispergierbaren Polymerpulvern im wesentlichen auf der Basis von Styrol/Butadien-, Styrol/Acrylat- und (Meth)acrylat-Polymerisaten bereitzustellen, welches die Nachteile des geschilderten Stand der Technik überwindet und mit dem stabile Polymerdispersionen und gut redispergierbare und zementstabile Kunststoffpulver erhalten werden.

Gegenstand der Erfindung ist ein Verfahren zur Herstellung von Schutzkolloid-stabilisierten Polymeren in Form deren wässrigen Polymerdispersionen oder in Wasser redispergierbaren Pulver durch Emulsionspolymerisation von einem oder mehreren ethylenisch ungesättigten Monomeren in Gegenwart von Schutzkolloid und gegebenfalls Trocknung der damit erhaltenen Polymerdispersionen, dadurch gekennzeichnet, daß ein oder mehrere Monomere aus der Gruppe umfassend Vinylaromaten, 1.3-Diene, Acrylsäureester und Methacrylsäureester von Alkoholen mit 1 bis 15 C-Atomen in Gegenwart einer Schutzkolloid-Kombination polymerisiert werden, aus einem oder mehreren Schutzkolloiden aus der Gruppe der hydrophob modifizierten, teilverseiften Polyvinylester, welche als 2%-ige wässrige Lösung eine Oberflächenspannung von ≤ 40 mN/m erzeugen, und aus einem oder mehreren Schutzkolloiden, welche als 2%-ige wässrige Lösung eine Oberflächenspannung von > 40 mN/m erzeugen.

Geeignete Vinylaromaten sind Styrol und Methylstyrol, vorzugsweise wird Styrol eingesetzt. Beispiele für 1.3-Diene sind 1.3-Butadien und Isopren, bevorzugt wird 1.3-Butadien. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Gegebenenfalls können noch bis zu 30 Gew%, bezogen auf das Gesamtgewicht der Monomerphase, weitere mit Vinylaromaten, 1.3-Dienen und (Meth)acrylsäureestern copolymerisierbare Monomere wie Ethylen, Vinylchlorid oder Vinylester von unverzweigten oder verzeigten Carbonsäuren copolymerisiert werden.

Gegebenenfalls können noch 0.05 bis 10 Gew%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -50°C bis +100°C, vorzugsweise -20°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Besonders bevorzugt werden Gemische mit 20 bis 80 Gew% Vinylaromat, insbesondere Styrol und 80 bis 20 Gew% 1.3-Dien, insbesondere 1.3-Butadien; Gemische mit 20 bis 80 Gew% Vinylaromat, insbesondere Styrol und 80 bis 20 Gew% Acrylsäureester, insbesondere Butylacrylat und 2-Ethylhexylacrylat; sowie Gemische mit 20 bis 80 Gew% Methacrylsäureester, insbesondere Methylmethacrylat und 80 bis 20 Gew%, Acrylsäureester, insbesondere Butylacrylat und/oder 2-Ethylhexylacrylat, wobei die Gemische gegebenenfalls die obengenannten Hilfsmonomere in den angegebenen Mengen enthalten können. Am meisten bevorzugt werden die Styrol/1.3-Butadien-Gemische und die Styrol/Acrylsäureester-Gemische.

Die Herstellung der Schutzkolloid-stabilisierten Polymere erfolgt nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen oder Vinylchlorid kann auch unter Druck, im allgemeinen zwischen 5 bar und 100 bar, gearbeitet werden.

Die Initiierung der Polymerisation erfolgt mit den für die Emulsionspolymerisation gebräuchlichen zumindest teilweise wasserlöslichen, thermischen Initiatoren oder Redox-Initiator-Kombinationen. Geeignete organische Initiatoren, die jeweils sowohl in Wasser als auch in den Monomeren teilweise löslich sind, sind Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im allgemeinen in einer Menge von 0.05 bis 3 Gew%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew%, bezogen auf das Gesamtgewicht der Monomere.

Zur Steuerung des Molekulargewichts können während der Polymerisation regelnde Substanzen eingesetzt werden. Sie werden üblicherweise in Mengen zwischen 0.01 bis 5.0 Gew%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Stabilisierung des Polymerisationsansatzes erfolgt mittels der genannten Schutzkolloid-Kombination, wobei vorzugsweise ohne Zusatz von Emulgatoren gearbeitet wird. Geeignete Schutzkolloide aus der Gruppe der hydrophob modifizierten, teilverseiften Polyvinylester, welche als 2%-ige wässrige Lösung eine Oberflächenspannung von ≤ 40 mN/m erzeugen, können beispielsweise mittels Hydrophobierung von Polyvinylacetat durch Copolymerisation von Vinylacetat mit hydrophoben Comonomeren erhalten werden. Beispiele hierfür sind Isopropenylacetat, langkettige, vorzugsweise mit 7 bis 15 C-Atomen, verzweigte und unverzweigte Vinylester wie Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate von C₁- bis C₁₂- Alkoholen wie Diisopropylmaleinat und Diisopropylfumarat, Vinylchlorid, Vinylalkylether von Alkoholen mit mindestens 4 C-Atomen wie Vinylbutylether, C₂- bis C₁₀-Olefine wie Ethen und Decen. Die Hydrophobierung kann auch durch Polymerisation von Vinylacetat in Gegenwart von Reglern wie Alkylmercaptanen mit C₂- bis C₁₈-Alkylrest wie Dodecylmercaptan oder tert.-Dodecylmercaptan erfolgen. Eine weitere Möglichkeit zur Hydrophobierung von Polyvinylacetat ist die polymeranaloge Umsetzung, beispielsweise Acetalisierung von Vinylalkoholeinheiten in teilverseiftem Polyvinylacetat mit C₁- bis C₄-Aldehyden wie Butyraldehyd. Der Anteil der hydrophoben Einheiten beträgt vorzugsweise 0.1 bis 10 Gew%, bezogen auf das Gesamtgewicht des teilverseiften Polyvinylacetats. Der Hydrolysegrad beträgt von 70 bis 99.9 Mol%, vorzugsweise 84 bis 92 Mol%, die Höpplerviskosität (DIN 53015, Methode nach Höppler, 4%-ige wässrige Lösung) von 1 bis 30 mPas, vorzugsweise 2 bis 15 mPas.

Bevorzugt werden als hydrophob modifizierte, teilverseifte Polyvinylester die teilverseiften Polyvinylacetate mit 84 bis 92 Mol% Vinylalkohol-Einheiten und 0.1 bis 10 Gew% an Einheiten, welche sich von Vinylestern einer alpha-verzweigten Carbonsäure mit 5 oder 9 bis 11 C-Atomen im Säurerest, Isopropenylacetat und Ethen ableiten. Besonders bevorzugt werden die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester von der Fa. Shell unter den Bezeichnungen VeoVa^{R}5, VeoVa^{R}9, VeoVa^{R}10 und VeoVa^{R}11 angeboten werden.

Geeignete Schutzkolloide, welche als 2 %-ige wässrige Lösung eine Oberflächenspannung von > 40 mN/m erzeugen, sind teilverseifte Polyvinylacetate, Polyvinylpyrrolidone, Carboxymethyl-, Methyl-, Hydroxyethyl-, Hydroxypropyl-Cellulose, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere, Dextrine wie Gelbdextrin.

Am meisten bevorzugt werden Kombinationen aus den genannten, hydrophob modifizierten Polyvinylestern mit teilverseiften Polyvinylacetaten mit einem Hydrolysegrad von 80 bis 95 Mol%, einer Höpplerviskosität von 1 bis 30 mPas, vorzugsweise 2 bis 15 mPas, welche als 2%-ige wässrige Lösung eine Oberflächenspannung von > 40 mN/m erzeugen.

Die Schutzkolloide werden im allgemeinen in einer Menge von insgesamt 1 bis 15 Gew%, bezogen auf das Gesamtgewicht der Monomere, bei der Polymerisation zugesetzt. Das Gewichtsverhältnis von hydrophobiertem, teilverseiftem Polyvinylester zu den Schutzkolloiden, welche als 2%-ige wässrige Lösung eine Oberflächenspannung von > 40 mN/m erzeugen, beträgt von 10/1 bis 1/10. Die genannten Schutzkolloide sind mittels dem Fachmann bekannter Verfahren zugänglich.

Die Emulsionspolymerisation kann im Batchverfahren, wobei alle Komponenten im Reaktor vorgelegt werden, und im Dosierverfahren, wobei einzelne oder mehrere Komponenten während der Polymerisation zugeführt werden, durchgeführt werden. Mischtypen mit Vorlage und Dosierung werden bevorzugt. Die Dosierungen können separat (räumlich und zeitlich) durchgeführt werden oder die zu dosierenden Komponenten können alle oder teilweise voremulgiert dosiert werden.

Zur Initiierung der Polymerisation kann der thermische Initiator insgesamt vorgelegt werden, oder teilweise vorgelegt und teilweise dosiert werden, oder nur dosiert werden. Die Schutzkolloide werden vorzugsweise vorgelegt. Es kann auch eine Komponente aus der Schutzkolloidkombination vorgelegt und die andere dosiert werden, oder ein Teil des Gemisches vorgelegt und der Rest als wässrige Lösung zudosiert werden. Vorlage bzw. Dosierung des Schutzkolloidanteils werden dabei so gesteuert, daß das Schutzkolloid stets in ausreichender Menge von etwa 1 bis 15 Gew%, bezogen auf den Monomeranteil in der Polymerisationsmischung, vorhanden ist, da einerseits bei zu niedriger Menge Stippenbildung erfolgt, und andererseits bei zu hoher Menge die Viskosität der Dispersion zu stark erhöht wird.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew%, vorzugsweise von 40 bis 65 Gew%. Zur Herstellung der in Wasser redispergierbaren Polymerpulvern werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel wird die Verdüsungshilfe in einer Menge von 5 bis 25 Gew%, bezogen auf die polymeren Bestandteile der Dispersion, eingesetzt.

Geeignete Verdüsungshilfen sind teilverseifte Polyvinylacetate; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden als Verdüsungshilfe teilverseifte Polyvinylacetate mit einem Hydrolysegrad von 80 bis 95 Mol%, einer Höppler-Viskosität von 1 bis 30 mPas, welche gegebenenfalls mit Isopropenylacetat- oder Vinylethereinheiten modifiziert sein können.

Bei der Verdüsung hat sich vielfach ein Gehalt von bis zu 1.5 Gew% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Beispiele für Antiblockmittel sind Cabzw. Mg-Carbonat, Talk, Gips, Kieselsäure, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die schutzkolloidstabilisierten Polymere können als Dispersion oder Pulver in den dafür typischen Anwendungsbereichen eingesetzt werden.

Die nachfolgenden Beispiele dienen der weiteren Erläuterung der Erfindung:

### Beispiel 1:

In einem Rührautoklaven mit ca. 5 l Inhalt wurden 1110 ml entionisiertes Wasser, 538 g einer 20 Gew%-igen wässrigen Lösung eines teilverseiften Polyvinylacetats mit einem Hydrolysegrad von 88 Mol%, einer Höpplerviskosität der 4%-igen Lösung von 4 mPas (DIN 53015, Methode nach Höppler bei 20°C), das zu 2 Gew% gelöst in Wasser eine Oberflächenspannung von 44 mN/m erzeugte, sowie 363 g einer 20 Gew%-igen wässrigen Lösung eines teilverseiften Copolymeren aus Vinylacetat und VeoVa^{R}10, mit einem Hydrolysegrad von 88 Mol%, einer Höpplerviskosität der 4%-igen Lösung von 4 mPas, das zu 2 Gew% gelöst in Wasser eine Oberflächenspannung von 37 mN/m erzeugte, vorgelegt. Der pH-Wert wurde mit 10 Gew%-iger Ameisensäure auf 4.0 bis 4.2 eingestellt. Anschließend wurde evakuiert, mit Stickstoff gespült, erneut evakuiert und ein Gemisch aus 112 g Styrol, 168 g 1.3-Butadien und 8 g tert.-Dodecylmercaptan eingesaugt. Dieses Gemisch war durch Zugabe von 30 mg Benzochinon gegen vorzeitige Polymerisation stabilisiert. Nach Aufheizen auf 80°C wurde die Polymerisation durch gleichzeitiges Einfahren von zwei Katalysatorlösungen gestartet, von denen die erste aus 110 g entionisiertem Wasser und 15.5 g einer 40%-igen wässrigen tert.-Butylhydroperoxidlösung und die andere aus 116 g entionisiertem Wasser und 13 g Natriumformaldehydsulfoxylat bestand, wobei die Dosierung der beiden Katalysatorlösungen mit gleicher Zulaufgeschwindigkeit (18 ml/h) erfolgte. Nach Polymerisationsbeginn wurde mit der dosierten Zugabe eines Gemischs von 951 g 1.3-Butadien, 634 g Styrol und 9 g tert.-Dodecylmercaptan mit einer Rate von 5.3 g/min begonnen. Nach Ende des Monomerzulaufs wurde noch 2 h bei 80°C mit unveränderter Zulaufgeschwindigkeit der Initiatorlösung nachpolymerisiert, anschließend wurde der Zulauf der Initiatorlösungen beendet und abgekühlt.
Man erhielt eine stabile, grobteilige (Coulter LS 230; D_{w} = 950 nm) und koagulatfreie Dispersion, die bei einem Festkörpergehalt von 47% eine Viskosität (Brookfield-Viskosimeter, 20°C, 20 Upm) von 380 mPas aufwies.
400 Gew.-Teile der Dispersion wurden mit 200 Gew.-Teilen einer 10.3 Gew%-igen Lösung eines Polyvinylalkohols (teilverseiftes Polyvinylacetat, Hydrolysegrad 88 Mol%, Viskosität der 4%-igen Lösung 13 mPas), 0.84 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.
Das erhaltene trockene Pulver wurde mit 10% handelsüblichem Antiblockmittel (Gemisch aus Calcium-Magnesium-Carbonat und Magnesiumhydrosilikat) versetzt.

### Vergleichsbeispiel 2:

Die Herstellung der Dispersion erfolgte analog Beispiel 1, aber unter Vorlage von 900 g einer 20 Gew%-igen wässrigen Lösung eines teilverseiften Polyvinylacetats mit einem Hydrolysegrad von 88 Mol%, einer Höpplerviskosität der 4%-igen Lösung von 4 mPas, das zu 2 Gew% gelöst in Wasser eine Oberflächenspannung von 44 mN/m erzeugte, als alleinigem Schutzkolloid. Alle anderen Maßnahmen entsprachen Beispiel 1.

### Vergleichsbeispiel 3:

Die Herstellung der Dispersion erfolgte analog Beispiel 1, aber unter Vorlage von 900 g einer 20 Gew%-igen wässrigen Lösung eines teilverseiften Copolymeren aus Vinylacetat und VeoVa^{R}10 mit einem Hydrolysegrad von 88 Mol% und eine Höpplerviskosität der 4%-igen Lösung von 4 mPas, das zu 2 Gew.-% gelöst in Wasser eine Oberflächenspannung von 37 mN/m erzeugte, als alleinigem Schutzkolloid. Alle anderen Maßnahmen entsprachen Beispiel 1.

### Beispiel 4:

Die Herstellung der Dispersion erfolgte analog Beispiel 1, wobei anstelle des teilverseiften Polyvinylacetats 800 g einer 10 Gew%-igen wässrigen Lösung eines Gelbdextrins (Avedex 35, Fa. Avebe), das zu 2 Gew.-% gelöst in Wasser eine Oberflächenspannung von 50 mN/m erzeugte, zusammen mit dem hydrophob modifiziertem Schutzkolloid eingesetzt wurde. Alle anderen Maßnahmen entsprachen Beispiel 1.

### Prüfung der Polymerpulver:

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde und 24 Stunden gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Luftgehalts im Mörtel:

Es wurde ein DIN-Mörtel nach DIN 1164 der nachfolgenden Rezeptur mit einem Wasser-Zement-Faktor W/Z von 0.45 und einem Kunststoff-Zement-Faktor K/Z von 0.15 angerührt:

| | |
|---|---|
| Portlandzement PZ-35F | 900 g |
| Normsand | 2700 g |
| Silicon-Entschäumer S-860 (Fa. Wacker Chemie) | 7.2 g |
| Dispersionspulver | 135 g |
| Wasser | 405 g |

Der Luftgehalt wurde mittels DIN 18555 Teil 2 bestimmt.

### Bestimmung der Zementstabilität:

Es wurde eine Zementmischung der nachfolgenden Rezeptur angerührt:

| | |
|---|---|
| Portlandzement | 82.5 g |
| Calcit (CaCO)₃ 10-40 mm | 75 g |
| Quarzsand 200-500 mm | 128 g |
| Dispersionspulver | 15 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1:**

| Beispiel | Röhrenabsitz 1 h/24 h [cm] | Blockfestigkeit | Luftgehalt im Mörtel | Zementstabilität |
|---|---|---|---|---|
| Bsp. 1 | 0.1 / 0.5 | 2 | 6 % | 2 h |
| V.bsp. 2 | 0.4 / 0.9 | 2 | 4 % | 15 Minuten |
| V.bsp. 3 | 0.4 / 3.2 | 4 | 14 % | 2 h |
| Bsp. 4 | 0.2 / 0.7 | 2 | 6 % | 2 h |

Mit der erfindungsgemäßen Verfahrensweise (Beispiel 1 und 4) werden auch auf der Basis von Copolymerisaten von hydrophoben Comonomeren wie Styrol und Butadien Dispersionspulver zugänglich, welche sich durch sehr gute Redispergierbarkeit (Röhrenabsitz) und sehr gute anwendungstechnische Eigenschaften (Zementstabilität) auszeichnen. Wird bei der Emulsionspolymerisation allein in Gegenwart von herkömmlichen, nicht hydrophob modifizierten Schutzkolloiden polymerisiert (Vergleichsbeispiel 2), sind die anwendungstechnischen Eigenschaften (Zementstabilität) der damit erhältlichen Pulver unbefriedigend. Bei alleiniger Stabilisierung mit hydrophob modifiziertem Schutzkolloid (Vergleichsbeispiel 3) werden Pulver mit deutlich schlechterer Redispergierbarkeit und unbefriedigender Blockstabilität erhalten.

## Patentansprüche

1. Verfahren zur Herstellung von Schutzkolloid-stabilisierten Polymeren in Form deren wässrigen Polymerdispersionen oder in Wasser redispergierbaren Pulver durch Emulsionspolymerisation von einem oder mehreren ethylenisch ungesättigten Monomeren in Gegenwart von Schutzkolloid und gegebenfalls Trocknung der damit erhaltenen Polymerdispersionen, dadurch gekennzeichnet, daß ein oder mehrere Monomere aus der Gruppe umfassend Vinylaromaten, 1.3-Diene, Acrylsäureester und Methacrylsäureester von Alkoholen mit 1 bis 15 C-Atomen in Gegenwart einer Schutzkolloid-Kombination polymerisiert werden, aus einem oder mehreren Schutzkolloiden aus der Gruppe der hydrophob modifizierten, teilverseiften Polyvinylester, welche als 2%-ige wässrige Lösung eine Oberflächenspannung von ≤ 40 mN/m erzeugen, und aus einem oder mehreren Schutzkolloiden, welche als 2%-ige wässrige Lösung eine Oberflächenspannung von > 40 mN/m erzeugen.

2. Verfahren nach Anspruch 1, dadurch gekennzeichnet, daß als hydrophob modifizierte, teilverseifte Polyvinylester solche mit einem Hydrolysegrad von 70 bis 95 Mol%, einer Höpplerviskosität von 1 bis 30 mPas eingesetzt werden, welche durch Copolymerisation von Vinylacetat mit hydrophoben Comonomeren wie Isopropenylacetat, langkettigen, verzweigten und unverzweigten Vinylester, Vinylester von gesättigten alpha-verzweigten Monocarbonsäuren mit 5 oder 9 bis 11 C-Atomen, Dialkylmaleinat, Dialkylfumarat, Vinylchlorid, Vinylalkylether von Alkoholen mit mindestens 4 C-Atomen, C₂- bis C₁₀-Olefine,
oder durch Polymerisation von Vinylacetat in Gegenwart von Reglern wie Alkylmercaptanen mit C₂- bis C₁₈-Alkylrest, oder durch Acetalisierung von Vinylalkoholeinheiten in teilverseiften Polyvinylacetaten mit C₁- bis C₄-Aldehyden erhalten werden.

3. Verfahren nach Anspruch 1 oder 2, dadurch gekennzeichnet, daß als hydrophob modifizierte, teilverseifte Polyvinylacetate ein oder mehrere aus der Gruppe der teilverseiften Polyvinylester mit 84 bis 92 Mol% Vinylalkohol-Einheiten und 0.1 bis 10 Gew% Vinylester-Einheiten von Vinylestern einer alpha-verzweigten Carbonsäure mit 5 oder 9 bis 11 C-Atomen im Säurerest, Isopropenylacetat-Einheiten oder Ethen-Einheiten, eingesetzt werden.

4. Verfahren nach Anspruch 1 bis 3, dadurch gekennzeichnet, daß als Schutzkolloide, welche als 2%-ige wässrige Lösung eine Oberflächenspannung von > 40 mN/m erzeugen, ein oder mehrere aus der Gruppe umfassend teilverseifte Polyvinylacetate, Polyvinylpyrrolidone, Carboxymethyl-, Methyl-, Hydroxyethyl-, Hydroxypropyl-Cellulose, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere, Dextrine eingesetzt werden.

5. Verfahren nach Anspruch 4, dadurch gekennzeichnet, daß in Gegenwart von teilverseiftem Polyvinylacetat mit einem Hydrolysegrad von 80 bis 95 Mol% und einer Höpplerviskosität von 1 bis 30 mPas, polymerisiert wird.

6. Verfahren nach Anspruch 1 bis 5, dadurch gekennzeichnet, daß als ethylenisch ungesättigte Monomere Gemische mit 20 bis 80 Gew% Vinylaromat und 80 bis 20 Gew% 1.3-Dien, oder Gemische mit 20 bis 80 Gew% Vinylaromat und 80 bis 20 Gew% Acrylsäureester, oder Gemische mit 20 bis 80 Gew% Methacrylsäureester und 80 bis 20 Gew% Acrylsäureester polymerisiert werden.

7. Verfahren nach Anspruch 1 bis 6, dadurch gekennzeichnet, daß noch 0.05 bis 10 Gew%, bezogen auf das Gesamtgewicht des Monomergemisches, Hilfsmonomere copolymerisiert werden aus der Gruppe umfassend ethylenisch ungesättigte Mono- und Dicarbonsäuren, ethylenisch ungesättigte Carbonsäureamide und -nitrile, Mono- und Diester der Fumarsäure und Maleinsäure, ethylenisch ungesättigte Sulfonsäuren bzw. deren Salze, vorvernetzende, mehrfach ethylenisch ungesättigte Comonomere, nachvernetzende Comonomere, epoxidfunktionelle Comonomere, siliciumfunktionelle Comonomere, Comonomere mit Hydroxy- oder CO-Gruppen.

8. Verfahren nach Anspruch 1 bis 7, dadurch gekennzeichnet, daß die Trocknung der Polymerdispersion mittels Sprühtrocknung, gegebenenfalls nach Zugabe weiterer Schutzkolloide erfolgt.

## Claims

1. Process for preparing protective-colloid-stabilized polymers in the form of their aqueous polymer dispersions or of their water-redispersible powders by emulsion polymerization of one or more ethylenically unsaturated monomers in the presence of protective colloid and, if desired, drying the resultant polymer dispersions, characterized in that one or more monomers selected from the class encompassing vinylaromatic compounds, 1,3-dienes and acrylates and methacrylates of alcohols having from 1 to 15 carbon atoms are polymerized in the presence of a protective colloid combination made from one or more protective colloids selected from the class consisting of hydrophobically modified, partially hydrolysed polyvinyl esters which as 2% strength aqueous solution produce a surface tension of ≤ 40 mN/m, and made from one or more protective colloids which as 2% strength aqueous solution produce a surface tension of > 40 mN/m.

2. Process according to Claim 1, characterized in that the hydrophobically modified, partially hydrolysed polyvinyl esters used are those having a degree of hydrolysis of from 70 to 95 mol% and a Höppler viscosity of from 1 to 30 mPas, and obtained by copolymerizing vinyl acetate with hydrophobic comonomers, such as isopropenyl acetate, long-chain, branched and unbranched vinyl esters, vinyl esters of saturated alpha-branched monocarboxylic acids having 5 or from 9 to 11 carbon atoms, dialkyl maleate, dialkyl fumarate, vinyl chloride, vinyl alkyl ethers of alcohols having at least 4 carbon atoms, or C₂-C₁₀ olefins,
or by polymerizing vinyl acetate in the presence of regulators, such as alkyl mercaptans having a C₂-C₁₈-alkyl radical,
or by acetalizing vinyl alcohol units in partially hydrolysed polyvinyl acetates with C₁-C₄ aldehydes.

3. Process according to Claim 1 or 2, characterized in that the hydrophobically modified, partially hydrolysed polyvinyl acetates used are one or more selected from the class consisting of the partially hydrolysed polyvinyl esters having from 84 to 92 mol% of vinyl alcohol units and from 0.1 to 10% by weight of vinyl ester units of vinyl esters of an alpha-branched carboxylic acid having 5 or from 9 to 11 carbon atoms in the acid radical, isopropenyl acetate units or ethene units.

4. Process according to Claims 1 to 3, characterized in that the protective colloids which as 2% strength aqueous solution produce a surface tension of > 40 mN/m are one or more materials selected from the class encompassing partially hydrolysed polyvinyl acetates, polyvinylpyrrolidones, carboxymethyl-, methyl-, hydroxyethyl- and hydroxypropylcellulose, poly(meth)acrylic acid, poly(meth)acrylamide, polyvinyl sulphonic acids, melamine-formaldehydesulphonates, naphthalene-formaldehydesulphonates, styrene-maleic acid copolymers, vinyl ether-maleic acid copolymers and dextrins.

5. Process according to Claim 4, characterized in that polymerization is carried out in the presence of partially hydrolysed polyvinyl acetate having a degree of hydrolysis of from 80 to 95 mold and a Höppler viscosity of from 1 to 30 mPas.

6. Process according to Claims 1 to 5, characterized in that the ethylenically unsaturated monomers polymerized are mixtures with from 20 to 80% by weight of vinylaromatic compound and from 80 to 20% by weight of 1,3-diene, or mixtures with from 20 to 80% by weight of vinylaromatic compound and from 80 to 20% by weight of acrylate, or mixtures with from 20 to 80% by weight of methacrylate and from 80 to 20% by weight of acrylate.

7. Process according to Claims 1 to 6, characterized in that there is also copolymerization of from 0.05 to 10% by weight, based on the total weight of the monomer mixture, of auxiliary monomers selected from the class encompassing ethylenically unsaturated mono- and dicarboxylic acids, ethylenically unsaturated carboxamides, ethylenically unsaturated carbonitriles, mono- and diesters of fumaric acid and maleic acid, ethylenically unsaturated sulphonic acids and salts of these, precrosslinking comonomers with more than one ethylenic unsaturation, post-crosslinking comonomers, epoxy-functional comonomers, silicon-functional comonomers and comonomers having hydroxyl or CO groups.

8. Process according to Claims 1 to 7, characterized in that the polymer dispersion is dried by spray drying, if desired after adding further protective colloids.

## Revendications

1. Procédé pour la préparation de polymères stabilisés par des colloïdes de protection sous forme de leurs dispersions aqueuses de polymère ou de poudre pouvant être redispersée dans de l'eau, par polymérisation dans une émulsion d'un ou de plusieurs monomères éthyléniquement insaturés en présence de colloïde de protection et, le cas échéant, par séchage des dispersions de polymère ainsi obtenues, caractérisé en ce qu'on polymérise un ou plusieurs monomères du groupe comprenant des aromates de vinyle, des 1,3-diènes, des esters de l'acide acrylique et des esters de l'acide méthacrylique d'alcools comprenant 1 à 15 atomes de carbone, en présence d'une combinaison de colloïdes de protection constituée d'un ou de plusieurs colloïdes de protection parmi le groupe des poly(esters de vinyle) modifiés de manière hydrophobe, partiellement saponifiés, qui engendrent, sous forme d'une solution aqueuse à 2%, une tension superficielle ≤ 40 mN/m, et d'un ou de plusieurs colloïdes de protection qui engendrent, sous forme d'une solution aqueuse à 2%, une tension superficielle > 40 mN/m.

2. Procédé selon la revendication 1, caractérisé en ce qu'on utilise comme poly(esters de vinyle) modifiés de manière hydrophobe, partiellement saponifiés ceux présentant un taux d'hydrolyse de 70 à 95 moles-%, une viscosité de Höppler de 1 à 30 mPa.s, qui sont obtenus par copolymérisation d'acétate de vinyle avec des comonomères hydrophobes tels que l'acétate d'isopropényle, des esters de vinyle à longue chaîne, ramifiés et non ramifiés, des esters vinyliques d'acides monocarboxyliques saturés ramifiés en alpha comprenant 5 ou 9 à 11 atomes de carbone, un maléate de dialkyle, un fumarate de dialkyle, le chlorure de vinyle, des vinylalkyléthers d'alcools comprenant au moins 4 atomes de carbone, des oléfines en C₂ à C₁₀, ou par polymérisation d'acétate de vinyle en présence de régulateurs tels que des alkylmercaptans comprenant un radical alkyle en C₂ à C₁₈, ou par acétalisation d'unités d'alcool vinylique en poly(acétates de vinyle) partiellement saponifiés avec des aldéhydes en C₁ à C₄.

3. Procédé selon les revendications 1 ou 2, caractérisé en ce qu'on utilise comme poly(acétates de vinyle) modifiés de manière hydrophobe, partiellement saponifiés, un ou plusieurs poly(acétates de vinyle) parmi le groupe des poly(esters de vinyle) partiellement saponifiés comprenant 84 à 92 moles-% d'unités d'alcool vinylique et 0,1 à 10% en poids d'unités d'ester de vinyle d'esters vinyliques d'un acide carboxylique ramifié en alpha comprenant 5 ou 9 à 11 atomes de carbone dans le radical acide, d'unités d'acétate d'isopropényle ou d'unités d'éthylène.

4. Procédé selon les revendications 1 à 3, caractérisé en ce qu'on utilise comme colloïdes de protection, qui engendrent, sous forme de solution aqueuse à 2%, une tension superficielle > 40 mN/m, un ou plusieurs colloïdes parmi le groupe comprenant des poly(acétates de vinyle) partiellement saponifiés, des polyvinylpyrrolidones, des carboxyméthylcelluloses, des méthylcelluloses, des hydroxyéthylcelluloses, des hydroxypropylcelluloses, des poly(acides (méth)acryliques), du poly(méth)acrylamide, des poly(acides vinylsulfoniques), des "mélamineformaldéhydesulfonates, des naphtalèneformaldéhydesulfonates, des copolymères de l'acide styrènemaléique et de l'acide vinyléthermaléique, des dextrines.

5. Procédé selon la revendication 4, caractérisé en ce qu'on polymérise en présence de poly(acétate de vinyle) partiellement saponifié présentant un taux d'hydrolyse de 80 à 95 moles-% et une viscosité de Höppler de 1 à 30 mPa.s.

6. Procédé selon les revendications 1 à 5, caractérisé en ce qu'on polymérise, comme monomères éthyléniquement insaturés, des mélanges comprenant 20 à 80% en poids d'aromate de vinyle et 80 à 20% en poids de 1,3-diène, ou des mélanges comprenant 20 à 80% en poids d'aromate de vinyle et 80 à 20% en poids d'ester de l'acide acrylique, ou des mélanges comprenant 20 à 80% en poids d'ester de l'acide méthacrylique et 80 à 20% en poids d'ester de l'acide acrylique.

7. Procédé selon les revendications 1 à 6, caractérisé en ce qu'on copolymérise encore 0,05 à 10% en poids, par rapport au poids total du mélange de monomères, des monomères auxiliaires parmi le groupe comprenant des acides monocarboxyliques et dicarboxyliques éthyléniquement insaturés, des amides et des nitriles d'acides carboxyliques éthyléniquement insaturés, des monoesters et des diesters de l'acide fumarique et de l'acide maléique, des acides sulfoniques éthyléniquement insaturés ou, selon le cas, leurs sels, des comonomères à préréticulation éthyléniquement polyinsaturés, des comonomères à postréticulation, des comonomères à fonctionnalité époxyde, des comonomères à fonctionnalité silicium, des comonomères comprenant des groupements hydroxy ou des groupements CO.

8. Procédé selon les revendications 1 à 7, caractérisé en ce que le séchage de la dispersion de polymère est réalisé par séchage par pulvérisation, le cas échéant après addition de colloïdes de protection supplémentaires.
